# EUROPEAN PATENT SPECIFICATION

(11) **EP 1 637 237 B1**
(45) Date of publication and mention of the grant of the patent: **15.02.2012**
(21) Application number: 05025549.6
(22) Date of filing: 30.09.1998
(51) Int. Cl.: B08B 1/04, H01M 2/26

(54) **Battery plate feeding and handling apparatus**
Batterieplattenzufuhrvorrichtung und Vorrichtung zur Handhabung
Dispositif servant à effectuer une allimentation en plaque d'accumulateur et appareil de manupulation

(30) Priority: 30.09.1997 US 60434 P; 23.10.1997 US 62747 P
(43) Date of publication of application: 22.03.2006
(62) Divisional of application: 98951981.4
(73) Proprietor: TBS ENGINEERING LIMITED, Cheltenham, Gloucestershire GL51 9TY (GB)
(72) Inventor: Redden, Galen H., Kansas City, MO 67448 (US)
(74) Representative: UEXKÜLL & STOLBERG

(56) References cited:
- DE-U1- 29 604 804
- GB-A- 711 598
- US-A- 2 343 532
- US-A- 3 002 503
- US-A- 3 457 574
- US-A- 4 382 308
- US-A- 5 197 837

## Description

### BACKGROUND OF THE INVENTION

### 1. FIELD OF THE INVENTION

The present invention relates to devices for feeding and handling stacks of plates such as lead plates used in the production of lead acid storage batteries. More particularly, the present invention relates to a battery plate feeding and handling apparatus that more effectively removes battery plates from stacks of plates, aligns or orients the plates as they are being transported, cleans the lugs on the battery plates, wraps the battery plates in insulative material, synchronizes the transport of the plates with down-stream operations, and rejects damaged or otherwise defective plates.

### 2. DESCRIPTION OF THE PRIOR ART

Lead acid storage batteries are formed from a plurality of lead plates that must be individually handled and processed during the manufacture of the batteries. Prior art devices for feeding and handling such plates suffer from several limitations that limit their utility. For example, prior art battery plate feeding and handling devices often have difficulty in removing the forwardmost plate from a stack of plates without removing more than one plate and/or damaging the plate as it is removed.

Additionally, prior art battery plate feeding and handling devices have difficulty gripping the plates and positioning lug brushes during the cleaning of the lugs of the plates, making it difficult to properly clean the battery plates. These prior art devices also have difficulty positioning or orienting the plates before they are enveloped in insulation, often resulting in mis-application of the insulation.

Prior art battery plate feeding and handling devices also have components that are difficult to adjust and/or changeover. These prior art devices also have difficulty discarding defective plates and have difficulty synchronizing the movement of the battery plates among the various stages of the battery Production line.

### OBJECTS AND SUMMARY OF THE INVENTION

In view of the foregoing, it is an object of the present invention to provide a battery plate feeding and handling apparatus as claimed in claim 1 or 3.

The battery plate feeding and handling apparatus of the present invention includes an improved lug brush cleaning station that more effectively grips the plates as they are being cleaned and that more effectively and consistently positions a pair of lug brushes during cleaning and servicing. The station includes structure that permits an operator to select the amount of gripping force applied to the plates as they pass therethrough. The station also includes a servo assembly that more precisely positions the rotating brushes during cleaning of the lugs on the plates.

### BRIEF DESCRIPTION OF THE DRAWING FIGURES

A preferred embodiment of the present invention is described in detail below with reference to the attached drawing figures, wherein:
Fig. 1 is a schematic layout in plan view of a battery plate feeding and handling apparatus constructed in accordance with a preferred embodiment of the present invention;
Fig. 2 is an elevational view of one of the plate feeder and pick-up stations and lug brush cleaning stations of the apparatus taken along line 2-2 of Fig. 1;
Fig. 3 is a side view of the lug brush cleaning station of Fig. 2;
Fig. 4 is a fragmentary plan view of the plate feeder and pick-up station shown in Fig. 2;
Fig. 5 is a sectional view of the plate feeder and pick-up station taken along line 5-5 of Fig. 4;
Fig. 6 is a schematic depiction of the plate feeder illustrating the transport of a stack of plates against a stop;
Fig. 7 is a schematic depiction of the plate feeder illustrating the transport of the stack of plates and showing the gripping of the forwardmost plate in the stack by the stop;
Fig. 8 is a schematic depiction of the plate feeder illustrating the transport of a stack of plates and showing the removal of the forwardmost plate of the stack by the pick-up assembly;
Fig. 9 is an elevational view of the lug brush cleaning station showing the lug brushes in their operating, cleaning position;
Fig. 10 is an elevational view of the lug brush cleaning station showing the brushes in their idle position;
Fig. 11 is an elevational view of the lug brush cleaning station showing the brushes in their operating position but after they have become worn and are ready to be replaced; and
Fig. 12 is an elevational view of the lug brush cleaning station showing the brushes in their service position.

### DETAILED DESCRIPTION OF THE PREFERRED EMBODIMENTS

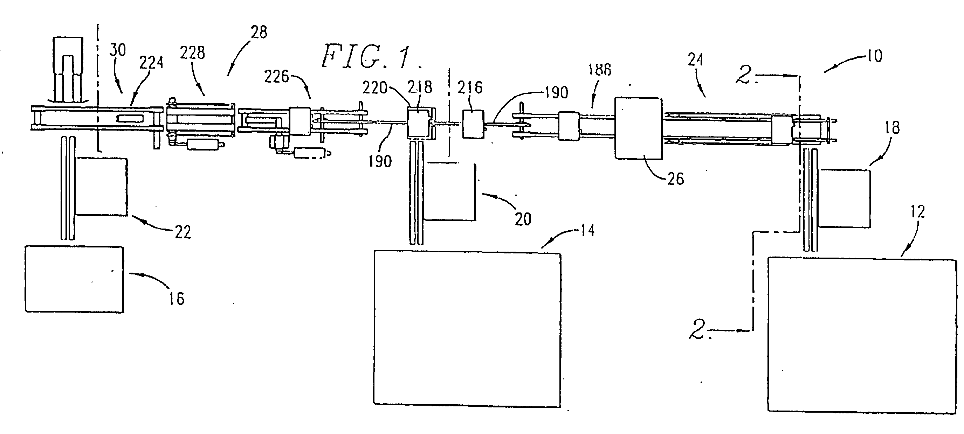

Turning now to the drawing figures, and particularly Fig. 1, the plate feeding and handling apparatus 10 of the present invention broadly includes a pair of automatic plate feeder and pick-up stations generally referred to by the numerals 12,14, a manual plate feeder station 16, three lug brush cleaning stations 18,20,22, a plate alignment station 24, a plate encapsulating station 26, a plate rejection station 28, and a plate synchronization assembly 30. Each of these stations is discussed separately below.

### PLATE FEEDER AND PICK-UP STATIONS

The automatic plate feeder and pick-up stations 12,14 are described in detail in application Serial No. 08/812,372, U.S. Patent No. 5,934,866, entitled PLATE FEEDER APPARATUS, filed March 5, 1997, hereby incorporated into the present application by reference. The station 12 handles battery plates that are to be wrapped in insulative material in the encapsulation station 26, whereas the station 14 handles plates that are not wrapped. The manual plate feeder station 16 is used for manually feeding battery plates into the production line for use in forming certain types of batteries that require an odd number of plates.

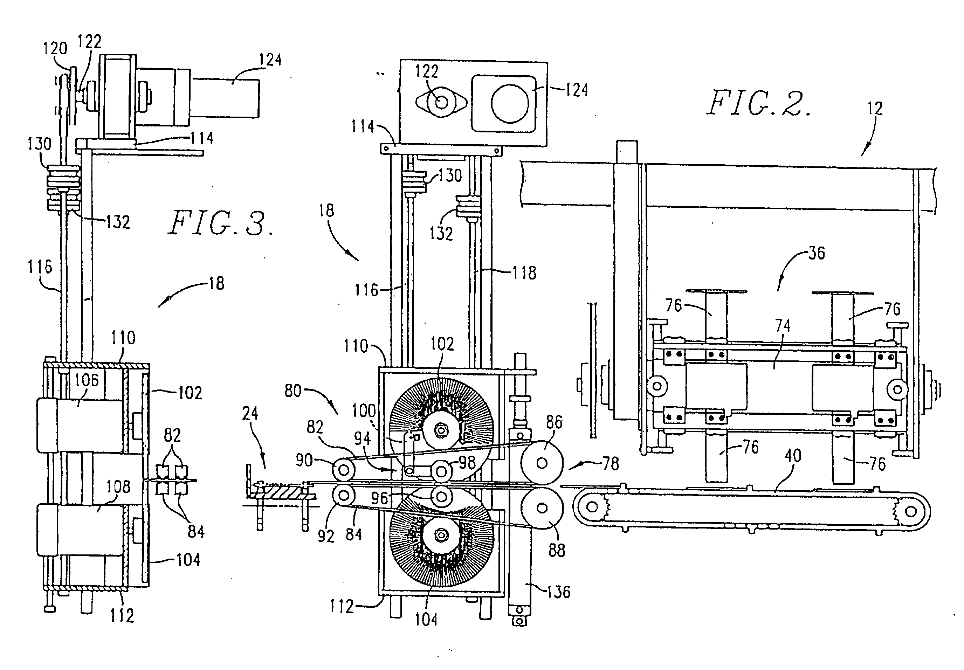

The automatic plate feeder and pick-up stations 12,14 are substantially identical; therefore only the station 12 is described and illustrated in detail herein. As best illustrated in Figs. 2-8, the station 12 includes a plate feeder 32 that holds and sequentially feeds two stacks 34 of plates, and a pick-up 36 that successively picks or removes the forwardmost plate 38 from each stack and then drops the removed plates onto a conveyor 40. The conveyor then carries the plates to the lug brush cleaning station 18 as described below. The plate feeder and pick-up are driven by a drive shaft coupled with a conventional AC motor, which may in turn be coupled with a variable frequency drive and a PLC or other type of controller for automating the operation of the station.

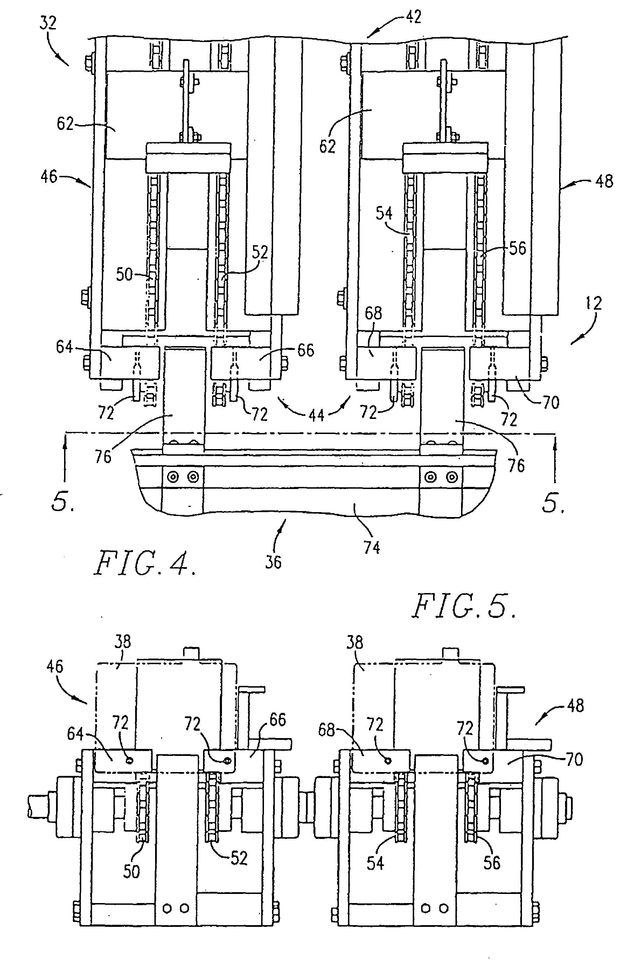

As best illustrated in Figs. 4 and 6-8, the plate feeder 32 has an inlet side 42 and an outlet side 44 and includes a pair of side-by-side conveyor assemblies 46,48. Each of the conveyor assemblies includes a pair of conveyor chains 50,52,54,56 trained over a set of drive and idler sprockets 58,60 and a plate pusher assembly 62 supported on top of the chains for holding and advancing the stacks 34 of plates towards the pick-up 36.

The outlet side 44 of each conveyor assembly 46,48 also includes a pair of stops 64,66,68,70 that serve as benchmarks to stop the forward movement of the plates on the conveyor chains 50,52,54,56. In accordance with one aspect of the present invention, each of the stops includes a vacuum port 72 that is coupled with a source of vacuum pressure.

The pick-up 36 includes a rotatable head 74 having at least two outwardly extending pick-up snouts 76 extending therefrom. As best illustrated in Fig. 4, the pick-up snouts are rotated between the chains 50,52,54,56 so that they contact the front surface of the forwardmost plates in the stacks 34 as described in more detail below. The pick-up snouts are coupled with a suitable source of vacuum pressure which is controlled by valve structure described more fully in U.S. Patent No. 5,934,866.

In operation, stacks 34 of plates are placed on the pusher assemblies 62, which are then placed on top of the conveyor chains 50,52,54,56. The plate feeder 32 is then operated to advance the pusher assemblies and stacks of plates towards the pick-up 36. To facilitate removal of only the forwardmost plate from each stack, the plate feeder shifts the stacks forward a first distance toward the pick-up and then shifts the stacks a second, shorter distance away from the pick-up during rotation of the pick-up as described in more detail below.

While the plate feeder 32 advances the stacks 34 of plates, the pick-up 36 rotates its snouts 76 in front of the forwardmosf plates 38 in the stacks. The snouts are valved so that they are connected to vacuum pressure as they rotate in front of the plates and than disconnected from the vacuum pressure as they pass over the conveyor 40. This permits each snout to remove the forwardmost plate from its associated stack as it passes thereby, to hold the removed plate as the vacuum head continues to rotate, and then to release the plate over the conveyor.

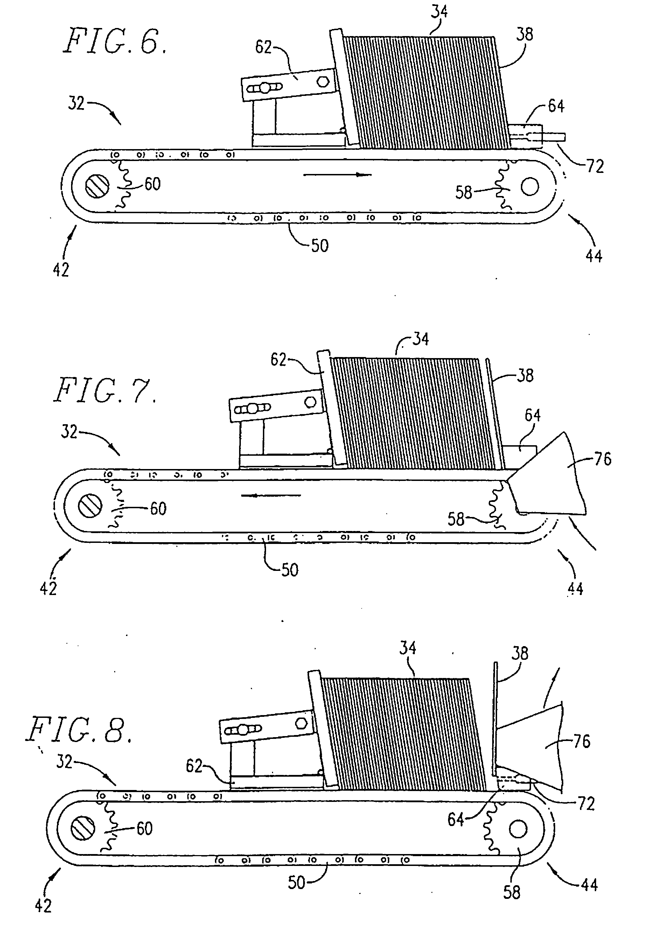

As best illustrated in Figs. 6-8, the operation of the plate feeder 32 and pick-up 36 are synchronized to ensure that the snouts 76 consistently pick or remove only the forwardmost plates 38 from the stacks 34 without damaging the removed plates as the snouts rotate by the stacks. The plate feeder initially advances the plates forward against the stops 64,66,68,70 before the pick-up snouts rotate by the stacks as illustrated in Fig. 6. The plate feeder then moves the stacks rearward as illustrated in Fig. 7 immediately before the snouts rotate by the stacks. This creates a gap between the forwardmost plates and the remaining plates in the stacks to ensure that the snouts remove only the forwardmost plates from the stacks. This also permits the snouts to continue to rotate by the stacks without striking the tail ends of the removed plates against the remaining plates in the stacks as illustrated in Fig. 8.

To further facilitate the removal of the forwardmost plates 38 from the stacks 34 without removing more than one plate from each stack, the vacuum ports 72 in the stops 64,66,68,70 are operated to capture and hold the forwardmost plates on the stops while permitting the plates behind the forwardmost plates to move slightly rearward, thus creating a gap between the forwardmost plates and the remaining plates in the stacks as illustrated in Fig. 7. This allows the snouts 76 of the pick-up 36 to gently contact the forwardmost plates as they are rotated thereby so that the snouts more consistently pick-up the forwardmost plates without picking up more than one plate each. This construction also allows the pick-up snouts to be operated at a lower vacuum pressure because less vacuum force is needed to pickup the forwardmost plates. The operation of the vacuum ports is preferably automatically sequenced with the rotation of the snouts with valve structure or under the control of a PLC or other controller.

After the snouts 76 have passed by the stacks 34, the plate feeder 32 once again shifts the stacks to their forwardmost positions and then back to their rearwardmost positions before the next snouts arrive. This positions and captures the next forwardmost plates against the stops 64,66,68,70. As mentioned above, the pusher assemblies 62 are moved forward toward the pick-up 36 a greater distance than they are moved away from the pick-up to account for the thickness of the removed plates. This ensures that the stacks are always positioned a pre-determined distance from the pick-up snouts regardless of how many plates have been removed.

The manual plate feeder station 16 illustrated in Fig. 1 is entirely conventional and includes a conveyor mechanism (not shown) on which battery plates may be manually placed for transport to the lug brush cleaning mechanism 22. The manual plate feeder station is typically used only when batteries requiring an odd number of plates are to be manufactured.

### LUG BRUSH CLEANING STATIONS

A lug brush cleaning station 18,20,22 is provided for each of the two automatic plate feeder and pick-up stations 12,14 and the manual plate feeder station 16. The three lug brush cleaning stations are substantially identical; therefore only the station 18 is illustrated and described in detail herein.

As best illustrated in Figs. 2 and 3, the lug brush cleaning station 18 includes a conveyor assembly 78 that receives and transports plates from the conveyor 40 and a brush mechanism 80 for cleaning the lugs on the plates as they are transported thereby on the conveyor assembly 78.

The conveyor assembly 78 preferably includes a pair of vertically stacked upper and lower conveyor belts 82,84 that are each trained around a drive roller 86,88 and an idler roller 90,92, and a biasing mechanism 94 for biasing the conveyor belts into contact with one another. The drive rollers are vertically spaced a small distance apart to define a nip region therebetween for gripping the plates as they exit the conveyor 40 and introducing the plates between the two conveyor belts 82,84.

The biasing mechanism 94 includes a fixed roller 96 positioned below the upper portion of the lower conveyor 84 and a spring-biased roller 98 positioned above the lower portion of the upper conveyor 82. The spring-biased roller is coupled with a spring and lever mechanism 100 that exerts a downward force on the spring-biased roller so that the roller exerts a downward force on the upper conveyor 82. This biases the conveyors into contact with one another to prevent the battery plates between the conveyors from moving relative to the conveyor belts as their lugs are being cleaned by the brush station. This also allows both of the conveyors to be driven by a single drive line if desired. The downward force exerted on the spring-biased roller by the lever mechanism can be selectively adjusted by an operator to provide the optimum amount of pressure between the two conveyors.

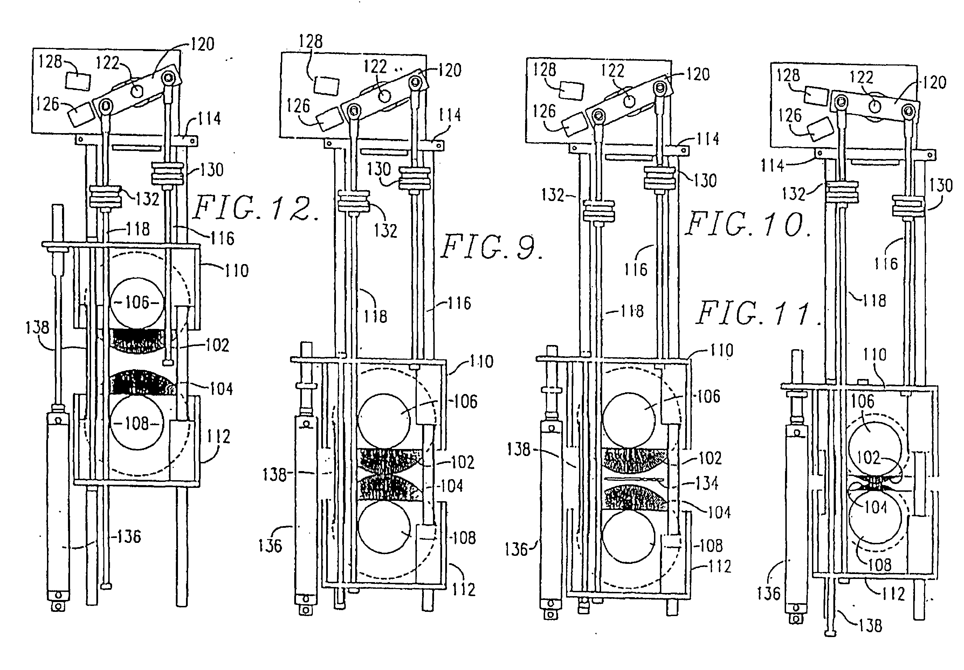

The brush mechanism 80 includes a pair of vertically stacked upper and lower rotatable brushes 102,104 each driven by a separate motor 106,108. The brushes are preferably formed of steel and are approximately 10" in diameter and 1/2" thick. The brushes and their corresponding motors are supported on frames 110,112 that are suspended below an upper support 114 by a pair of tie rods 116,118. As best illustrated in Figs. 9-12, the upper ends of the tie rods are attached to a servo arm 120 that is coupled with the output shaft 122 of a servo motor and gear box 124 that is mounted on the support 114.

As illustrated in Figs. 9 and 11, the servo motor 124 can be operated to reposition the upper and lower brushes 102,104 as they become worn. Initially, when the brushes are new, the servo motor 124 positions the brushes as illustrated in Fig. 9. Then, as the brushes become worn and decrease in diameter, the servo motor gradually rotates the servo arm clockwise as illustrated in Fig. 11 to lower the upper brush 102 and raise the lower brush 104 to move the centers of the brushes closer together to maintain the contact between the outer edges of the brushes.

As the servo arm 120 is rotated clockwise, the tie rod 118 raises the lower brush 104 and the tie rod 116 lowers the upper brush 102 the exact same distance. Similarly, when the servo arm is rotated counterclockwise, the tie rod 118 lowers the lower brush 104 and the tie rod 116 raises the upper brush 102 the exact same distance. Thus, as the servo motor shaft 122 is rotated, the servo arm 120 and tie rods simultaneously lift or lower the brushes the same distance in the reverse direction so that the brushes are always the same distance away from the plates carried between the conveyors 82,84.

To sense and monitor the positioning of the upper and lower brushes 102,104, a pair of position sensing switches or contacts 126,128 may be mounted to the support 114. The switches may be coupled with a controller or with indicators to alert an operator when the brushes become completely worn and need to be replaced.

In preferred forms, each of the tie rods 116,118 has two segments that are joined by a pancake cylinder 130,132. As illustrated in Fig. 10, the pancake cylinder 130 can be operated to raise the upper brush 102 a slight distance and the pancake cylinder 132 can be operated to lower the lower brush 104 a slight difference to create a small gap between the two brushes. The pancake cylinders are typically operated whenever the apparatus 10 is temporarily shut down and the conveyors 82,84 have been stopped. This separates the brushes from a battery plate 134 that has stopped therebetween to prevent the brushes from eroding the lug off of the battery plate.

The brush mechanism 80 also preferably includes a cylinder 136 that can be operated to lift the brushes 102,104 into a raised, service position as illustrated in Fig. 12. The cylinder is attached to the frame 110 of the upper brush 102, which is in turn connected to the frame 112 of the lower brush 104 by a tie rod 138. As best illustrated in Fig. 9, the tie rod is slightly longer than the spacing between the two frames when the brushes are in their operating positioning. The cylinder will therefore first raise the upper brush a short distance before the tie rod begins to raise the lower brush, thus slightly separating the brushes when they are in their service position illustrated in Fig. 12.

Although the invention has been described with reference to the preferred embodiment illustrated in the attached drawing figures, it is noted that equivalents may be employed and substitutions made herein without departing from the scope of the invention as recited in the claims.

Having thus described the preferred embodiment of the invention, what is claimed as new and desired to be protected by Letters Patent includes the following:

## Claims

1. A plate handling apparatus (10) comprising:
a conveyor assembly (78) for advancing a battery plate (186) having a lug;
a lug brush cleaning mechanism (18, 20, 22) positioned adjacent the conveyor assembly (78) for cleaning the lug on the battery plate (186) as the battery plate (186) passes thereby;
the lug brush cleaning mechanism (18, 20, 22) including-a pair of rotatable lug brushes (102, 104), and
positioning mechanism for simultaneously positioning the brushes (102, 104) relative to the conveyor assembly (78) to permit simultaneous adjustment of the brushes (102, 104) as they become worn,
**characterized in that** the positioning mechanism includes -
a first tie rod (116) coupled with the first brush (102),
a second tie rod (118) coupled with the second brush (104),
a motor assembly (124) for moving the first tie rod (116) in one direction and simultaneously moving the second tie rod (118) in an opposite direction, and
a pancake cylinder (130, 132) coupled with each of the first and
second tie rods (116, 118).

2. The plate handling apparatus (10) as set forth in claim 1, wherein the motor assembly (124) moves the first and second tie rods (116, 118) equal distances.

3. A plate handling apparatus (10) comprising:
a conveyor assembly (78) for advancing a battery plate (134, 186) having a lug;
a lug brush cleaning mechanism (18, 20, 22) positioned adjacent the conveyor assembly (78) for cleaning the lug on the battery plate (134, 186) as the battery plate (134, 186) passes thereby, the lug brush cleaning mechanism (18, 20, 22) including-a pair of rotatable lug brushes (102, 104), and
positioning mechanism for simultaneously positioning the brushes (102, 104) relative to the conveyor assembly (78) to permit simultaneous adjustment of the brushes (102, 104) as they become worn,
**characterized by** the positioning mechanism including -
a rotatably mounted servo arm (120),
a first tie rod (116) having a lower end coupled with the first brush (102) and an upper end connected to the servo arm (120),
a second tie rod (118) having a lower end coupled with the second brush (104) and an upper end connected to the servo arm (120),
a motor assembly (124) for selectively rotating the servo arm (120) for moving the first tie rod (116) in one direction and simultaneously moving the second tie rod (118) in an opposite direction to simultaneously move both the first and second brushes (102, 104) either toward one another or away from one another.

4. The plate handling apparatus (10) as set forth in claim 3, the positioning mechanism further including a pancake cylinder (130, 132) coupled with each of the first and second tie rods (116, 118).

5. The plate handling apparatus (10) as set forth in claim 3, the conveyor assembly (78) including a pair of stacked conveyor belts (82, 84) and a biasing mechanism (94) for biasing the conveyor belts (82, 84) into contact with one another.

6. The plate handling apparatus (10) as set forth in claim 5, the biasing mechanism (94) including a fixedly mounted roller (96) operatively coupled with the lower conveyor (84) and a spring-biased roller (98) operatively coupled with the upper conveyor (82) for exerting a downward force on the upper conveyor (82).

7. A plate handling apparatus (10) as set forth in claim 1 or 3, further comprising a powered cylinder (136) for simultaneously raising both lug brushes (102, 104) in the same direction to a service position wherein both lug brushes (102, 104) are raised above and out of the conveying path of the battery plates (134, 186).

8. The plate handling apparatus (10) as set forth in claim 1, further including a cylinder (136) for raising both the first and second lug brushes (102, 104).

9. The plate handling apparatus (10) as set forth in claim 6, the conveyors (82, 84) each including a conveyor chain.

10. The plate handling apparatus (10) as set forth in claim 6, the conveyors (82, 84) each including a conveyor belt.

## Patentansprüche

1. Plattenhandhabungsvorrichtung (10), die aufweist:
eine Förderanordnung (78) zum Befördern einer Batterieplatte (186), die eine Anschlussklemme aufweist;
einen Anschlussklemmenbürstenreinigungsmechanismus (18, 20, 22), der benachbart zu der Förderanordnung (78) angeordnet ist, zur Reinigung der Anschlussklemme an der Batterieplatte (186), während sich die Batterieplatte (186) daran vorbei bewegt;
wobei der Anschlussklemmenbürstenreinigungsmechanismus (18, 20, 22) ein Paar drehbarer Anschlussklemmenbürsten (102, 104) und
einen Positionierungsmechanismus zur gleichzeitigen Positionierung der Bürsten (102, 104) relativ zu der Förderanordnung (78) aufweist, um eine gleichzeitige Einstellung der Bürsten (102, 104) zu ermöglichen, wenn diese abgenutzt werden,
**dadurch gekennzeichnet, dass** der Positionierungsmechanismus aufweist:
eine erste Zugstange (116), die mit der ersten Bürste (102) gekoppelt ist,
eine zweite Zugstange (118), die mit der zweiten Bürste (104) gekoppelt ist,
eine Motoranordnung (124) zum Bewegen der ersten Zugstange (116) in eine Richtung und zum gleichzeitigen Bewegen der zweiten Zugstange (118) in eine entgegengesetzte Richtung und
einen Flachzylinder (130, 132), der jeweils mit der ersten und der zweiten Zugstange (116, 118) gekoppelt ist.

2. Plattenhandhabungsvorrichtung (10) nach Anspruch 1, bei der die Motoranordnung (124) die erste und die zweite Zugstange (116, 118) gleiche Entfernungen bewegt.

3. Plattenhandhabungsvorrichtung (10), die aufweist:
eine Förderanordnung (78) zum Befördern einer Batterieplatte (134, 186), die eine Anschlussklemme aufweist;
einen Anschlussklemmenbürstenreinigungsmechanismus (18, 20, 22), der benachbart zu der Förderanordnung angeordnet ist, zur Reinigung der Anschlussklemme an der Batterieplatte (134, 186), während sich die Batterieplatte (134, 186) daran vorbei bewegt, wobei der Anschlussklemmenbürstenreinigungsmechanismus (18, 20, 22) aufweist:
ein Paar drehbarer Anschlussklemmenbürsten (102, 104) und
einen Positionierungsvorrichtung zur gleichzeitigen Positionierung der Bürsten (102, 104) relativ zu der Förderanordnung (78), um eine gleichzeitige Einstellung der Bürsten (102, 104) zu ermöglichen, wenn diese abgenutzt werden,
**dadurch gekennzeichnet, dass** der Positionierungsmechanismus aufweist:
einen drehbar montierten Servohebel (120),
eine erste Zugstange (116), die ein unteres, mit der ersten Bürste (102) gekoppeltes Ende und ein oberes, mit dem Servohebel (120) verbundenes Ende aufweist,
eine zweite Zugstange (118), die ein unteres, mit der zweiten Bürste (104) gekoppeltes Ende und ein oberes, mit dem Servohebel (120) verbundenes Ende aufweist,
eine Motoranordnung (124) zur gezielten Drehung des Servohebels (120) zum Bewegen der ersten Zugstange (116) in eine Richtung und zum gleichzeitigen Bewegen der zweiten Zugstange (118) in eine entgegengesetzte Richtung, um sowohl die erste als auch die zweite Bürste (102, 104) gleichzeitig entweder aufeinander zu oder voneinander weg zu bewegen.

4. Plattenhandhabungsvorrichtung (10) nach Anspruch 3, bei der der Positionierungsmechanismus ferner einen Flachzylinder (130, 132) aufweist, der jeweils mit der ersten und der zweiten Zugstange (116, 118) gekoppelt ist.

5. Plattenhandhabungsvorrichtung (10) nach Anspruch 3, bei der die Förderanordnung (78) ein Paar übereinander angeordneter Förderbänder (82, 84) und einen Vorspannmechanismus (94) zum Vorspannen der Förderbänder (82, 84) in Kontakt miteinander aufweist.

6. Plattenhandhabungsvorrichtung (10) nach Anspruch 5, bei der der Vorspannmechanismus (94) eine fest montierte Rolle (96), die mit dem unteren Fördermittel (84) funktional verbunden ist, und eine mit Hilfe einer Feder vorgespannte Rolle (98) aufweist, die mit dem oberen Fördermittel (82) zum Ausüben einer nach unten gerichteten Kraft auf das obere Fördermittel (82) funktional verbunden ist.

7. Plattenhandhabungsvorrichtung (10) nach Anspruch 1 oder 3, die ferner einen angetriebenen Zylinder (136) zum gleichzeitigen Anheben beider Anschlussklemmenbürsten (102, 104) in die gleiche Richtung in eine Wartungsposition aufweist, wobei beide Anschlussklemmenbürsten (102, 104) über den und aus dem Förderweg der Batterieplatten (134, 186) angehoben werden.

8. Plattenhandhabungsvorrichtung (10) nach Anspruch 1, die ferner einen Zylinder (136) zum Anheben sowohl der ersten als auch der zweiten Anschlussklemmenbürste (102, 104) aufweist.

9. Plattenhandhabungsvorrichtung (10) nach Anspruch 6, bei der die Fördermittel (82, 84) jeweils eine Förderkette aufweisen.

10. Plattenhandhabungsvorrichtung (10) nach Anspruch 6, bei der die Fördermittel (82, 84) jeweils ein Förderband aufweisen.

## Revendications

1. Appareil de manipulation de plaque (10) comprenant :
un ensemble de transport (78) pour faire avancer une plaque d'accumulateur (186) ayant un oeillet ;
un mécanisme de nettoyage à brosse d'oeillet (18, 20, 22) positionné adjacent à l'ensemble de transport (78) pour nettoyer l'oeillet sur la plaque d'accumulateur (186) lorsque la plaque d'accumulateur (186) passe devant ;
le mécanisme de nettoyage à brosse d'oeillet (18, 20, 22) comprenant une paire de brosses d'oeillet rotatives (102, 104) et
un mécanisme de positionnement pour positionner simultanément les brosses (102, 104) par rapport à l'ensemble de transport (78) pour permettre l'ajustage simultané des brosses (102, 104) lorsqu'elles deviennent usées,
**caractérisé en ce que** le mécanisme de positionnement comprend:
une première tige de traction (116) couplée à la première brosse (102),
une seconde tige de traction (118) couplée à la seconde brosse (104),
un montage de moteur (124) pour déplacer la première tige de traction (116) dans une direction et pour déplacer simultanément la seconde tige de traction (118) dans une direction opposée et
un cylindre plat (130, 132) couplé à chacune des tiges de traction, à la première et la seconde (116, 118).

2. Appareil de manipulation de plaque (10) selon la revendication 1 dans lequel le montage de moteur (124) déplace la première et la seconde tige de traction (116, 118) de distances égales.

3. Appareil de manipulation de plaque (10) comprenant:
un ensemble de transport (78) pour faire avancer une plaque d'accumulateur (134, 186) ayant un oeillet ;
un mécanisme de nettoyage à brosse d'oeillet (18, 20, 22) positionné adjacent à l'ensemble de transport (78) pour nettoyer l'oeillet sur la plaque d'accumulateur (134, 186) lorsque la plaque d'accumulateur (134, 186) passe devant, le mécanisme de nettoyage à brosse d'oeillet (18, 20, 22) comprenant une paire de brosses d'oeillet rotatives (102, 104) et
un mécanisme de positionnement pour positionner simultanément les brosses (102, 104) par rapport à l'ensemble de transport (78) pour permettre l'ajustage simultané des brosses (102, 104) lorsqu'elles deviennent usées,
**caractérisé par** le mécanisme de positionnement comprenant :
un servo-bras (120) monté rotatif,
une première tige de traction (116) ayant une extrémité inférieure couplée à la première brosse (102) et une extrémité supérieure reliée au servo-bras (120),
une seconde tige de traction (118) ayant une extrémité inférieure couplée à la seconde brosse (104) et une extrémité supérieure reliée au servo-bras (120),
un montage de moteur (124) pour faire tourner de manière sélective le servo-bras (120) pour déplacer la première tige de traction (116) dans une direction et pour déplacer simultanément la seconde tige de traction (118) dans une direction opposée pour déplacer simultanément à la fois la première et la seconde brosses (102, 104) soit l'une vers l'autre, soit en s'éloignant l'une de l'autre.

4. Appareil de manipulation de plaque (10) selon la revendication 3, le mécanisme de positionnement comprenant de plus un cylindre plat (130, 132) couplé à chacune des tiges de traction, à la première et la seconde (116, 118).

5. Appareil de manipulation de plaque (10) selon la revendication 3, l'ensemble de transport (78) comprenant une paire de bandes de transport empilées (82, 84) et un mécanisme d'impact (94) pour donner un impact aux bandes de transport (82, 84) pour les mettre en contact l'une avec l'autre.

6. Appareil de manipulation de plaque (10) selon la revendication 5, le mécanisme d'impact (94) comprenant un galet monté de manière fixe (96) couplé opérationnellement à la bande inférieure (84) et un galet chargé par ressort (98) couplé opérationnellement à la bande supérieure (82) pour exercer une force vers le bas sur la bande supérieure (82).

7. Appareil de manipulation de plaque (10) selon la revendication 1 ou 3, comprenant de plus un cylindre entraîné (136) pour soulever simultanément les deux brosses d'oeillet (102, 104) dans la même direction dans une position d'entretien, les deux brosses d'oeillet (102, 104) étant soulevé au dessus du et sortant du chemin de transport des plaques d'accumulateur (134, 186).

8. Appareil de manipulation de plaque (10) selon la revendication 1, comprenant de plus un cylindre (136) pour soulever aussi bien la première que la seconde brosse d'oeillet (102, 104).

9. Appareil de manipulation de plaque (10) selon la revendication 6, les moyens de transport (82, 84) comprenant respectivement une chaîne transporteuse.

10. Appareil de manipulation de plaque (10) selon la revendication 6, les moyens de transport (82, 84) comprenant respectivement une bande transporteuse.
